# EUROPEAN PATENT APPLICATION

(11) **EP 4 775 326 A1**
(43) Date of publication of application: **15.07.2026**
(21) Application number: 26150476.5
(22) Date of filing: 07.01.2026
(51) Int. Cl.: B22D 17/20, B22D 17/32, B29C 45/82

(54) **DUAL-ACCUMULATOR OIL CIRCUIT SYSTEM FOR DIE-CASTING MACHINE**

(30) Priority: 08.01.2025 CN 202510026624
(71) Applicant: Ningbo LK Technology Co., Ltd., Ningbo City, Zhejiang Province 315000 (CN)
(72) Inventor: FENG, Guangming, Ningbo, 315000 (CN); LV, Anqing, Ningbo, 315000 (CN); ZHANG, Ruiting, Ningbo, 315000 (CN); WANG, Yunxiang, Ningbo, 315000 (CN); REN, Mingyuan, Ningbo, 315000 (CN); GAO, Binyao, Ningbo, 315000 (CN); GUO, Long, Ningbo, 315000 (CN); HU, Jiangpin, Ningbo, 315000 (CN)
(74) Representative: Miller, Ronald Anthony

(57) **Abstract**

The present invention provides a dual-accumulator oil circuit system for a die-casting machine, and belongs to the technical field of die-casting machine control. The dual-accumulator oil circuit system includes an injection cylinder and an accumulator, where the dual-accumulator oil circuit system further includes a booster accumulator; the booster accumulator includes a booster chamber and an annular chamber; the booster chamber is communicated with a rodless chamber of the injection cylinder; the accumulator is communicated with the annular chamber of the booster accumulator through a first servo valve; the annular chamber is communicated with an oil tank through a second servo valve; and a rod chamber of the injection cylinder is communicated with the oil tank through a third servo valve. In the present invention, A-bridge control is applied to the booster accumulator by the first servo valve and the second servo valve. By regulating the pressure in the annular chamber of the booster accumulator, different boost injection forces of the injection cylinder are achieved. The third servo valve can regulate oil discharge from the rod chamber of the injection cylinder, thereby regulating the injection speed of the injection cylinder. The present invention requires only three servo valves to achieve precise control of the injection speed and the injection force.

## Description

### TECHNICAL FIELD

The present invention relates to a die-casting machine control system, and in particular, to a dual-accumulator oil circuit system for a die-casting machine.

### BACKGROUND

In an injection system of a die-casting machine, inlet control is applied during a slow stage to prevent start-up impact. Additionally, differential control is applied during the slow stage, which not only reduces oil consumption of an accumulator but also minimizes the oil throttling effect and consequent heat generation. During a fast stage, outlet control is applied, which allows for multi-phase speed adjustment, thereby improving the flexibility of speed adjustment in the fast stage. During a boost stage, hydraulic A-bridge control is applied, which enables high-precision and stepless adjustment of boost injection forces, allowing a die-casting process to be customized according to specific requirements. To achieve the above functions in the prior art, at least four servo valves, including one for inlet control, one for outlet control, and two for A-bridge control, are required.

For example, Chinese Patent Publication No. CN118305295A, entitled *"Injection Control Oil Circuit, Die-Casting Machine, and Injection Control Method",* discloses a die-casting machine control circuit, including an oil supply system, a cartridge valve, and servo valves. The servo valves are connected with a rod chamber of an injection cylinder. An injection chamber is communicated with the rod chamber. When an injection control oil circuit operates in an outlet throttling mode, the cartridge valve is fully open, and a control device regulates an opening of the servo valve to control the injection speed. When the injection control oil circuit operates in an inlet throttling mode, the servo valve is fully open, and an opening of the cartridge valve is regulated through hydraulic oil to control the injection speed. In this solution, the die-casting machine has two speed regulation modes, outlet throttling and inlet throttling. However, it lacks precise and flexible control over the injection speed and the injection force, which can easily lead to defects in final cast products.

### SUMMARY

The present invention overcomes the problem of low injection control precision of the existing die-casting machines and provides a dual-accumulator oil circuit system for a die-casting machine. The present invention requires only three servo valves to achieve precise control of the injection speed and the injection force and improve the injection performance of the die-casting machine.

To solve the above technical problems, the present invention adopts the following technical solution. A dual-accumulator oil circuit system for a die-casting machine is provided, including an injection cylinder and an accumulator, where the dual-accumulator oil circuit system further includes a booster accumulator; the booster accumulator includes a booster chamber and an annular chamber; the booster chamber is communicated with a rodless chamber of the injection cylinder; the accumulator is communicated with the annular chamber of the booster accumulator through a first servo valve; the annular chamber is communicated with an oil tank through a second servo valve; and a rod chamber of the injection cylinder is communicated with the oil tank through a third servo valve. In the present invention, A-bridge control is applied to the booster accumulator by the first servo valve and the second servo valve. By regulating a pressure in the annular chamber of the booster accumulator, different boost injection forces of the injection cylinder are achieved. The third servo valve can regulate oil discharge from the rod chamber of the injection cylinder, thereby regulating a fast injection speed of the injection cylinder. The present invention requires only three servo valves to achieve precise control of the injection speed and the injection force and improve the injection performance of the die-casting machine.

Preferably, a differential circuit is formed between the rod chamber and the rodless chamber of the injection cylinder through the first servo valve. An oil flow in the differential circuit formed between the rod chamber and the rodless chamber of the injection cylinder is controlled by the first servo valve, thereby controlling the slow injection of the injection cylinder to reduce or even eliminate the start-up impact of the die-casting machine.

Preferably, the dual-accumulator oil circuit system further includes a valve assembly; the valve assembly includes a valve V1 and a valve V3; the valve V1 and the valve V3 are disposed on the differential circuit; and the valve V1 is disposed on a rod chamber side of the injection cylinder, and the valve V3 is disposed on a rodless chamber side of the injection cylinder. The valve V1 is a differential valve. During a slow injection stage, the valve V1, the valve V3, and the first servo valve are energized to form the differential circuit between the rod chamber and the rodless chamber of the injection cylinder. Oil in the accumulator enters the rodless chamber of the injection cylinder through a valve V4 and the valve V3. The injection speed during the slow injection stage is adjustable by adjusting the opening of the first servo valve, thereby enabling smooth movement of a piston rod in the injection cylinder.

Preferably, the valve assembly further includes a valve V2; the accumulator is connected in series with the first servo valve and the valve V3 in sequence to form a first oil circuit with the rodless chamber of the injection cylinder; and the accumulator forms a second oil circuit with the rodless chamber of the injection cylinder through the valve V2. The first oil circuit is an oil supply circuit through which the accumulator supplies oil to the rodless chamber of the injection cylinder through the first servo valve, and the second oil circuit is a main oil supply circuit through which the accumulator supplies oil to the rodless chamber of the injection cylinder.

Preferably, the dual-accumulator oil circuit system further includes an oil pump; the valve assembly further includes a valve V15; the oil pump forms a third oil circuit with the annular chamber of the booster accumulator through the valve V15; and the oil pump forms a fourth oil circuit with the booster chamber of the booster accumulator through the valve V15. The third oil circuit and the fourth oil circuit store energy for the annular chamber and the booster chamber of the booster accumulator to facilitate boosting control.

Preferably, the valve assembly further includes a valve V16; and the oil pump forms a fifth oil circuit with the accumulator through the valve V16. The fifth oil circuit is an energy storage oil circuit through which the oil pump supplies oil to the accumulator. In the subsequent oil circuit control, oil supply control is achieved through the accumulator and the booster accumulator.

Preferably, the valve assembly further includes a valve V8; and the accumulator is connected in series with the first servo valve and the valve V8 in sequence to form a sixth oil circuit with the annular chamber of the booster accumulator. The oil in the accumulator enters the booster accumulator via the sixth oil circuit, providing sufficient oil for the boosting control of the booster accumulator and achieving boosting control.

Preferably, the valve assembly further includes a valve V5; the annular chamber of the booster accumulator is communicated with the second servo valve to form a seventh oil circuit with the oil tank; and the booster chamber of the booster accumulator is communicated with the valve V5 to form an eighth oil circuit with the rodless chamber of the injection cylinder. The eighth oil circuit boosts the injection cylinder through the booster accumulator, and the opening of the second servo valve in the seventh oil circuit is adjustable to control the boosting of the eighth oil circuit on the injection cylinder, thereby enabling precise adjustment of the injection force.

Preferably, the valve assembly further includes a valve V13; and the oil pump is communicated with the valve V13 and the valve V3 in sequence to form a ninth oil circuit with the rodless chamber of the injection cylinder. The ninth oil circuit supplies oil through the oil pump, and the oil is introduced into the rodless chamber of the injection cylinder through the valve V13 and the valve V3. The oil in the rod chamber of the injection cylinder flows back to the oil tank through the third servo valve, such that manual pre-stroke operation can be performed on the die-casting machine before start-up.

Preferably, the valve assembly further includes a valve V14 and a valve V12; the oil pump is communicated with the valve V12 to form a tenth oil circuit with the rod chamber of the injection cylinder; and the injection cylinder is connected in series with the valve V3 and the valve V14 in sequence to form an eleventh oil circuit with the oil tank. The tenth oil circuit introduces the oil in the oil pump into the rod chamber of the injection cylinder, and the eleventh oil circuit introduces the oil in the rodless chamber of the injection cylinder into the oil tank, thereby performing manual or post-stroke operation on the die-casting machine.

Compared with the prior art, the present invention has the following advantages. (1) The present invention requires only three servo valves to achieve precise control of the injection speed and the injection force, improving the injection performance of the die-casting machine. (2) The present invention achieves small start-up impact and smooth movement of the die-casting machine. (3) During the fast stage, the present invention utilizes outlet control to achieve multi-phase adjustable high speed and improve the flexibility of speed adjustment in the fast stage.

### BRIEF DESCRIPTION OF THE DRAWINGS

FIG. 1 is a schematic diagram of an oil circuit system in the present invention;
FIG. 2 is a schematic diagram of an oil circuit during a manual pre-stroke stage in the present invention;
FIG. 3 is a schematic diagram of the oil circuit during a manual post-stroke stage and an automatic return stroke stage in the present invention;
FIG. 4 is a schematic diagram of the oil circuit during an injection energy storage stage in the present invention;
FIG. 5 is a schematic diagram of the oil circuit during a boost energy storage stage in the present invention;
FIG. 6 is a schematic diagram of the oil circuit during a slow injection stage in the present invention;
FIG. 7 is a schematic diagram of the oil circuit during a fast injection stage and a braking stage in the present invention;
FIG. 8 is a schematic diagram of the oil circuit during a boost stage in the present invention;
FIG. 9 is a schematic diagram of the oil circuit during a tracking stage in the present invention.

Reference Numerals: 1. injection cylinder; 2. booster accumulator; and 3. accumulator.

### DETAILED DESCRIPTION OF THE EMBODIMENTS

The technical solutions of the present invention are further described below with reference to the drawings and specific embodiments.

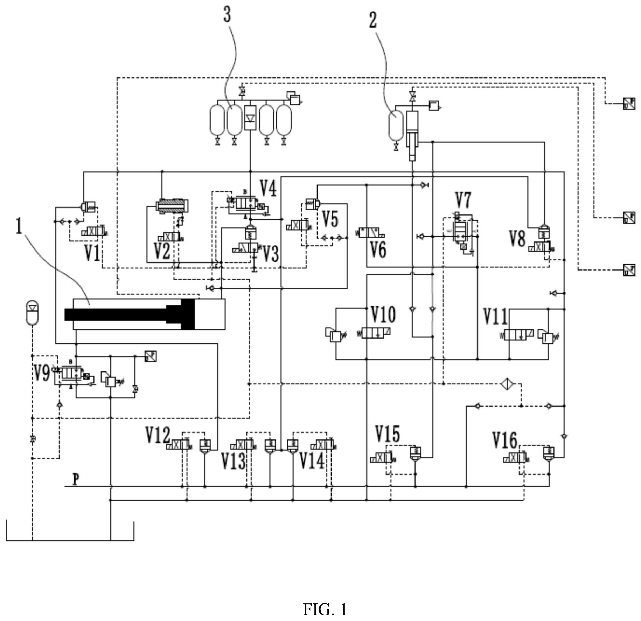

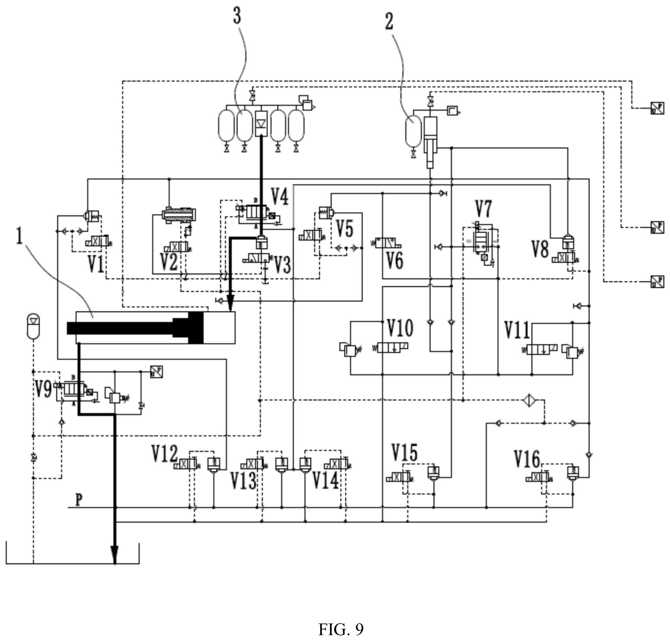

As shown in FIGS. 1 to 9, Embodiment 1 provides a dual-accumulator oil circuit system for a die-casting machine, including an injection cylinder 1, an accumulator 3, and a booster accumulator 2. The accumulator 3 and the booster accumulator 2 are connected with an oil circuit on an inlet side of a rodless chamber of the injection cylinder 1 to perform inlet control on the injection cylinder 1. The accumulator 3 and the booster accumulator 2 can store hydraulic energy and control oil in the injection cylinder 1. Specifically, the booster accumulator 2 includes a booster cylinder. The booster cylinder is internally provided with a convex chamber. A piston rod is slidably disposed inside the booster cylinder. A side of a rod end of the piston rod away from the piston forms a booster chamber with a convex end of the booster cylinder. A side of the piston of the piston rod close to the rod end forms an annular chamber with the booster cylinder. The die-casting machine injection oil circuit system further includes an oil pump and an oil tank. The oil pump can supply oil to the entire die-casting machine injection oil circuit system, and the oil tank forms an oil return structure of the entire die-casting machine injection oil circuit system.

As shown in the figures, the die-casting machine injection oil circuit system includes 16 hydraulic valves in total, namely valves V1 to V16. Among them, the valve V1 is a differential valve, and the valve V2 is a large-diameter active cartridge valve. The valve V3 is an ordinary cartridge valve with high pressure resistance. The valve V4 serves as a first servo valve with an adjustable opening. The valve V5 serves as an oil inlet valve for supplying oil to the rodless chamber of the injection cylinder 1 in control of a booster oil circuit. The valve V6, the valve V10, and the valve V11 are safety valves (normally open hydraulic valves). The valve V7 serves as a second servo valve with an adjustable opening. The valve V8 serves as an oil inlet valve for the accumulator 3 to supply oil to the annular chamber of the booster accumulator 2. The valve V9 serves as a third servo valve with an adjustable opening. The valve V12 serves as an oil inlet valve for the oil pump to supply oil to a rod chamber of the injection cylinder 1. The valve V13 serves as an oil inlet valve for the oil pump to supply oil to the rodless chamber of the injection cylinder 1. The valve V14 serves as an oil return valve for the oil in the rodless chamber of the injection cylinder 1 to flow back to the oil tank. The valve V15 serves as an oil inlet valve for the oil pump to supply oil to the booster chamber and the annular chamber of the booster accumulator 2. The valve V16 serves as an oil inlet valve for the oil pump to supply oil to the accumulator 3. A-bridge control is applied to the booster accumulator 2 by the first servo valve and the second servo valve. By regulating the pressure in the annular chamber of the booster accumulator 2, different boost injection forces of the injection cylinder 1 are controlled. The third servo valve can regulate oil discharge from the rod chamber of the injection cylinder 1, thereby regulating the injection speed of the injection cylinder 1. The present invention requires only three servo valves to achieve precise control of the injection speed and the injection force of the die-casting machine and improve the injection performance of the die-casting machine. The valve V6, the valve V10, and the valve V11 remain energized and closed in a non-pressure relief state, which protects the oil circuit system and facilitates the oil relief and maintenance of the oil circuit system.

The die-casting machine injection oil circuit system further includes a plurality of oil circuits. Specifically, a differential circuit is formed between the rodless chamber and the rod chamber of the injection cylinder 1. The differential circuit is supplied with oil by the accumulator 3. The differential circuit is formed from the rod chamber of the injection cylinder 1, connected in series with the valve V1, the valve V4, and the valve V3 in sequence, to the rodless chamber of the injection cylinder 1. The differential circuit allows the piston rod in the injection cylinder 1 to start slowly during a slow injection stage, reducing start-up impact. The accumulator 3 is connected in series with the first servo valve (the valve V4) and the valve V3 in sequence to form a first oil circuit with the rodless chamber of the injection cylinder 1. The first oil circuit is part of the differential circuit and can regulate an oil volume entering the injection cylinder 1 from the accumulator 3 by adjusting the opening of the first servo valve. The accumulator 3 is communicated with the valve V2 to form a second oil circuit with the rodless chamber of the injection cylinder 1. The second oil circuit serves as a main oil supply circuit through which the accumulator 3 supplies oil to the rodless chamber of the injection cylinder 1, and the valve V2 has a large diameter. The oil pump is communicated with the valve V15 to form a third oil circuit with the annular chamber of the booster accumulator 2, and the oil pump is communicated with the valve V15 to form a fourth oil circuit with the booster chamber of the booster accumulator 2. The third oil circuit and the fourth oil circuit are oil supply circuits through which the oil pump supplies oil to the booster accumulator 2 to store a pressure in the booster accumulator 2. It can be understood that the third oil circuit and the fourth oil circuit are parallel oil circuits. The oil pump is communicated with the valve V16 to form a fifth oil circuit with the accumulator 3. The fifth oil circuit serves as an energy storage oil circuit through which the oil pump supplies oil to the accumulator 3. The accumulator 3 is connected in series with the first servo valve (the valve V4) and the valve V8 in sequence to form a sixth oil circuit with the annular chamber of the booster accumulator 2. The sixth oil circuit is an oil supply circuit through which the accumulator 3 supplies oil to the booster accumulator 2, enabling the booster accumulator 2 to provide sufficient oil pressure. The annular chamber of the booster accumulator 2 is communicated with the second servo valve (the valve V7) to form a seventh oil circuit with the oil tank. The seventh oil circuit serves as an oil return circuit for the booster chamber of the booster accumulator 2. Since the opening of the second servo valve is adjustable, it is also an oil circuit for regulating the injection force of the injection cylinder 1 during boosting control. The booster chamber of the booster accumulator 2 is communicated with the valve V5 to form an eighth oil circuit with the rodless chamber of the injection cylinder 1. The eighth oil circuit is a booster oil circuit that achieves boosting of the injection cylinder 1 through the booster accumulator 2. The oil pump is connected in series with the valve V13 and the valve V3 in sequence to form a ninth oil circuit with the rodless chamber of the injection cylinder. In addition, the rod chamber of the injection cylinder 1 is communicated with the third servo valve (the valve V9) to form a main oil return circuit with the oil tank. The ninth oil circuit and the main oil return circuit allow the piston rod in the injection cylinder 1 to extend out slowly for manual pre-stroke operation. The oil pump is communicated with the valve V12 to form a tenth oil circuit with the rod chamber of the injection cylinder. The tenth oil circuit is an oil supply circuit through which the oil pump supplies oil to the rod chamber of the injection cylinder 1. The rodless chamber of the injection cylinder 1 is connected in series with the valve V3 and the valve V14 in sequence to form an eleventh oil circuit with the oil tank. The eleventh oil circuit serves as an oil return circuit for the rodless chamber of the injection cylinder 1. The tenth oil circuit and the eleventh oil circuit allow the piston rod in the injection cylinder 1 to retract slowly for manual or automatic return stroke operation.

It can be understood that only each of the rod chamber and the rodless chamber of the injection cylinder 1 is provided with only one oil port, and each of the booster chamber and the annular chamber of the booster accumulator 2 is provided with only one oil port. Therefore, when the above oil circuits are connected with the corresponding cylinders, oil pipes converge to form a main oil pipe before being connected with the oil port of the injection cylinder 1 or the booster accumulator 2.

In the present invention, the working process of the die-casting machine sequentially includes manual pre-stroke stage, manual post-stroke stage, injection energy storage stage, boost energy storage stage, slow injection stage, fast injection stage, braking stage, boost stage, pressure relief stage, tracking stage, and automatic return stroke stage, which are described below with reference to the figures.

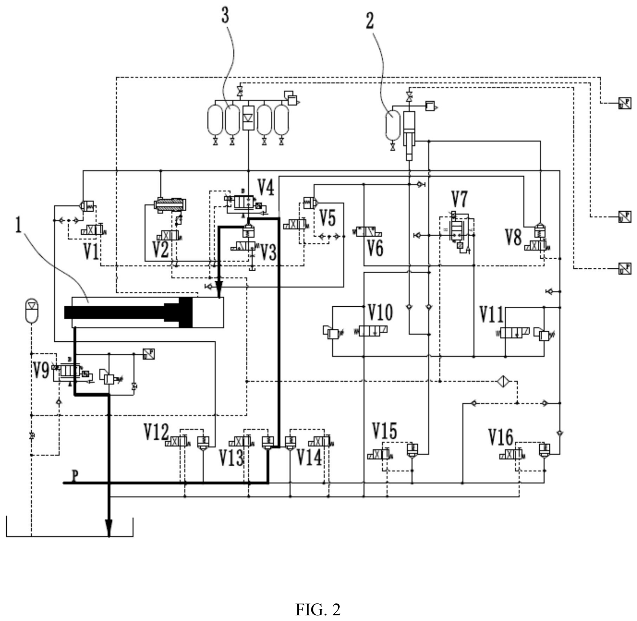

In the manual pre-stroke stage, as shown in FIG. 2, the valve V13, the valve V3, and the valve V9 are energized and open. The rodless chamber of the injection cylinder 1 is supplied with oil through the ninth oil circuit, and the oil returns through the main oil return circuit. It can be understood that during the manual pre-stroke stage, the pressure of the oil pumped into the rodless chamber side of the injection cylinder 1 by the oil pump is relatively high. To make the piston rod in the injection cylinder 1 move slowly and smoothly, the opening of the third servo valve (the valve V9) is reduced. This reduction helps to boost the pressure at the rod chamber side of the injection cylinder 1, increase the back pressure of the piston rod in the injection cylinder 1, and make the movement of the piston rod more stable.

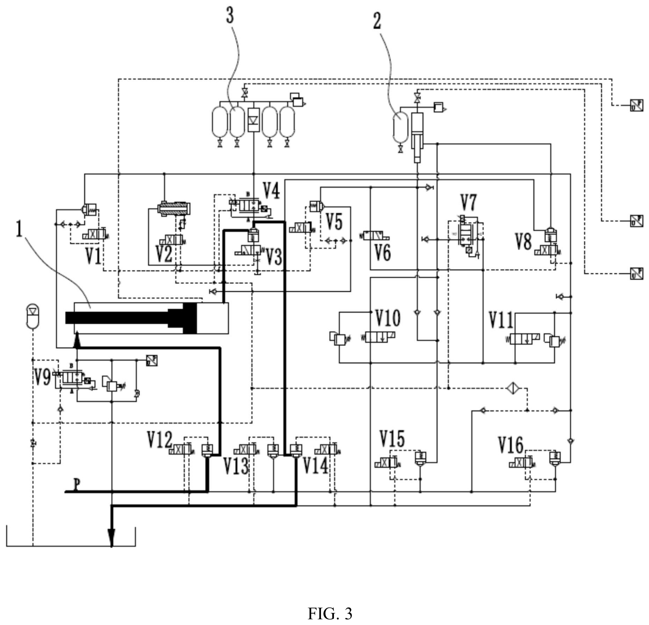

As shown in FIG. 3, in the manual post-stroke stage, the rod chamber of the injection cylinder 1 is supplied with oil through the tenth oil circuit, and the oil returns through the eleventh oil circuit. The valve V12 is energized, and the oil from the oil pump enters the rod chamber of the injection cylinder 1 through the valve V12. The valve V3 and the valve V14 are energized, and the oil in the rodless chamber of the injection cylinder 1 returns to the oil tank. When the oil in the oil pump enters the rod chamber of the injection cylinder 1, it generates a relatively high oil pressure in the rod chamber of the injection cylinder 1, while the oil pressure on the rodless chamber side of the injection cylinder 1 is relatively low. Therefore, staff can easily perform manual post-stroke operation, that is, return stroke operation, to retract the piston rod in the injection cylinder 1.

The manual pre-stroke operation and the manual post-stroke operation can detect whether the piston rod in the injection cylinder 1 encounters excessive resistance during movement and whether its movement stroke is smooth.

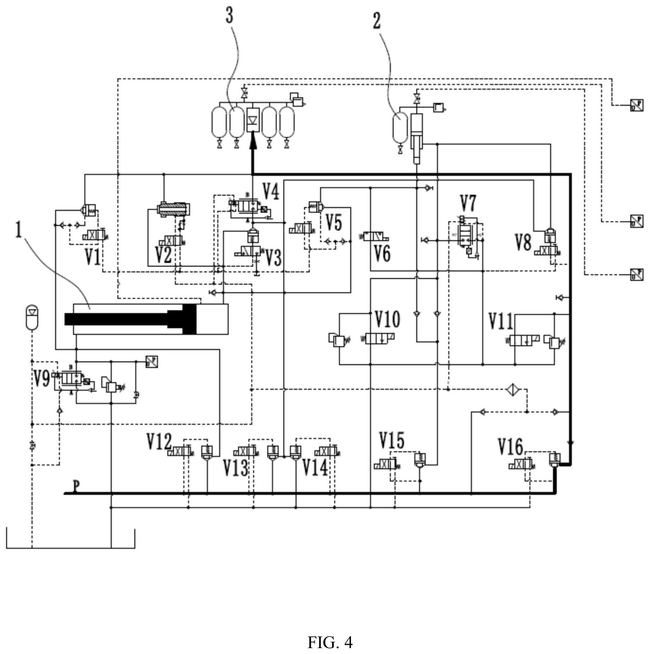

As shown in FIG. 4, the injection energy storage stage is controlled by the fifth oil circuit. During the injection energy storage stage, the valve V16 is energized and open. The oil pumped by the oil pump enters the accumulator 3 through the valve V16 and stores hydraulic energy in the accumulator 3. In the subsequent working process, the accumulator 3 provides system oil pressure, thereby improving the control efficiency and response speed of the system.

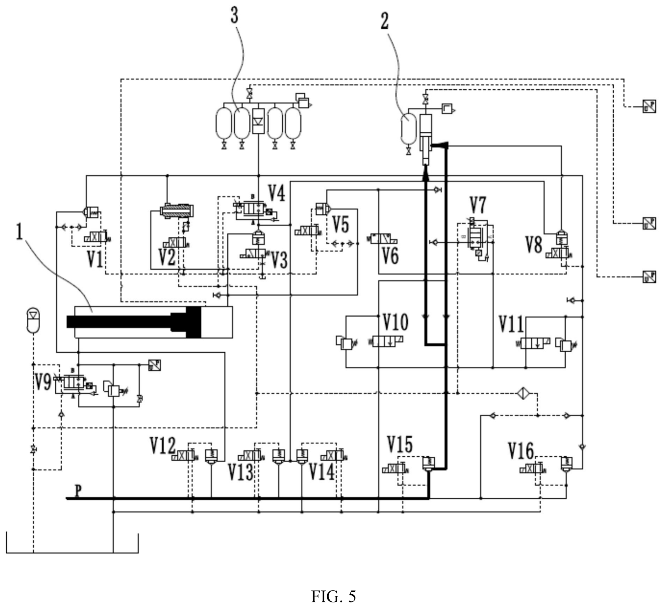

As shown in FIG. 5, the boost energy storage stage is controlled by the third oil circuit and the fourth oil circuit. During the boost energy storage stage, the valve V15 is energized and open. The oil pumped by the oil pump flows into the annular chamber and the booster chamber of the booster accumulator 2 through the valve V15. Specifically, after the oil passes through the valve V15, the oil circuit branches to form the third oil circuit and the fourth oil circuit. Therefore, the oil pressure of the third oil circuit is the same as the oil pressure of the fourth oil circuit, and the pressure of the oil entering the annular chamber of the booster accumulator 2 is the same as the pressure of the oil entering the booster chamber of the booster accumulator 2. The oil pressure in the annular chamber and the oil pressure in the booster chamber drive the piston rod in the booster cylinder to move, thereby achieving pressure storage in the booster accumulator 2. After the oil pressure storage is completed, the valve V15 is closed to maintain a sufficient pressure in the booster accumulator 2.

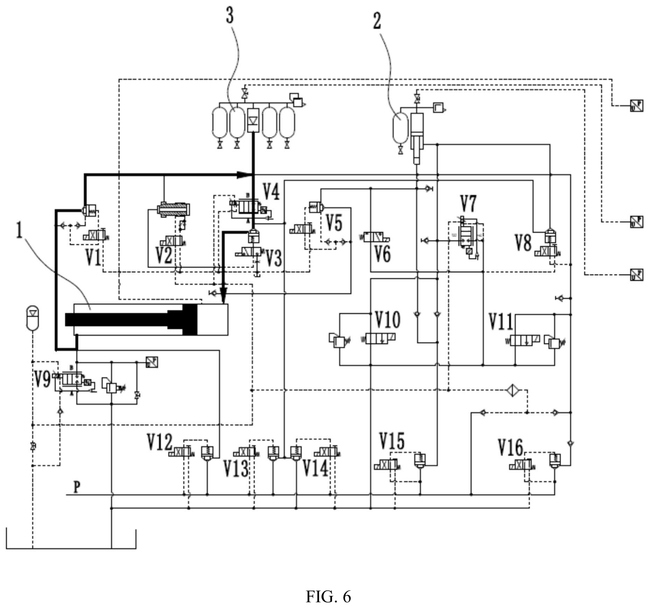

As shown in FIG. 6, the slow injection stage is controlled by the differential circuit and the first oil circuit. During the slow injection stage, the valve V3, the valve V4, and the valve V1 are energized and open. Since the accumulator 3 stores hydraulic energy during the injection energy storage stage, oil supply for the slow start of the injection cylinder 1 can be controlled by the accumulator 3. The oil in the accumulator 3 enters the rodless chamber of the injection cylinder 1 through the first oil circuit. On both sides of the piston rod in the injection cylinder 1, the oil acting area in the rod chamber is smaller than the oil acting area in the rodless chamber. Therefore, during the slow injection stage, the oil pressure in the rodless chamber of the injection cylinder 1 is greater than the oil pressure in the rod chamber of the injection cylinder 1. The piston rod in the injection cylinder 1 extends, and the first servo valve (the valve V4) has a small-diameter port. By adjusting the opening of the first servo valve, the oil pressure difference between the rodless chamber and the rod chamber of the injection cylinder 1 is reduced, and pressure buildup is performed at the same time to avoid unbalanced pressures between the two chambers, thereby achieving the slow extension of the piston rod in the injection cylinder 1. In this way, the start-up process of the die-casting machine is stable with small start-up impact, avoiding air entrainment of a molten metal stream in a barrel and preventing defects such as bubbles in the final die-cast product. In addition, the design can also reduce the heat generation caused by oil throttling and reduce the oil consumption during the slow injection stage.

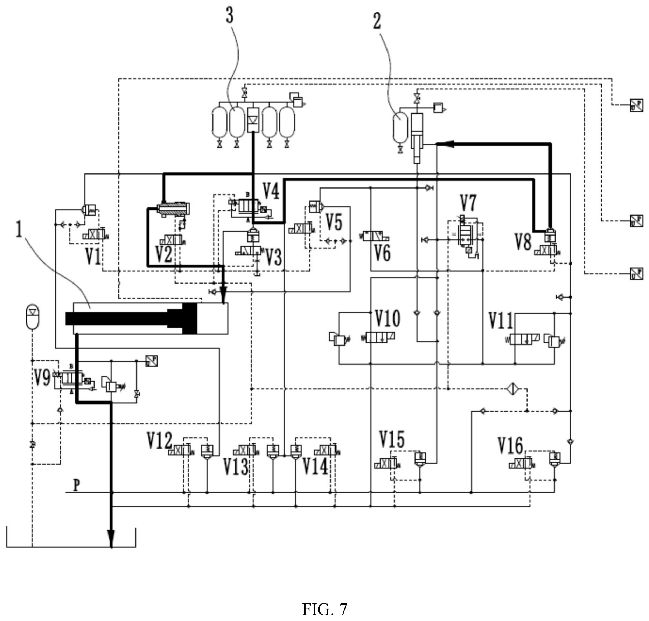

As shown in FIG. 7, the fast injection stage is controlled by the second oil circuit, the sixth oil circuit, and the main oil return circuit. During the fast injection stage, the accumulator 3 still provides the oil pressure. The valve V1, the valve V3, and the second servo valve (the valve V7) are de-energized and closed, and the valve V2, the valve V4, the valve V5, the valve V8, and the third servo valve (the valve V9) are energized. The oil inlet of the injection cylinder 1 is fully controlled by the valve V2 and is in a fully open state. Specifically, via the second oil circuit, the oil in the accumulator 3 enters the rodless chamber of the injection cylinder 1 through the valve V2, and through the main oil return circuit, the oil in the rod chamber of the injection cylinder 1 enters the oil tank through the third servo valve. To achieve the fast movement of the piston rod in the injection cylinder 1, the opening of the third servo valve is increased to reduce the resistance on the rod chamber side of the injection cylinder 1 and achieve the fast injection of the injection cylinder 1. In addition, via the sixth oil circuit, part of the oil in the accumulator 3 passes through the first servo valve (the valve V4) and then enters the annular chamber of the booster accumulator 2 through the valve V8 to prepare for boosting in the booster accumulator 2. Since the second servo valve (the valve V7) is closed, the oil in the annular chamber of the booster accumulator 2 cannot be discharged, and the oil in the booster chamber of the booster accumulator 2 will not enter the rodless chamber of the injection cylinder 1 through the valve V5. At this time, the valve V5 is opened in advance. When entering the boost stage, only the valve V7 needs to be opened to directly initiate the boost stage, thereby achieving fast pressure buildup and improving the response speed.

As shown in FIG. 7, the control oil circuit in the braking stage is the same as the control oil circuit in the fast injection stage. In the braking stage, the accumulator 3 still provides the oil pressure. The valve V1, the valve V3, and the second servo valve (the valve V7) are de-energized and closed, and the valve V2, the valve V4, the valve V5, the valve V8, and the third servo valve (the valve V9) are energized. The oil inlet of the injection cylinder 1 is fully controlled by the valve V2 and is in a fully open state. To achieve the deceleration and braking of the piston rod in the injection cylinder 1, only the opening of the third servo valve (the valve V9) needs to be adjusted to adjust the movement speed of the piston rod. Specifically, the opening of the third servo valve is reduced to increase the resistance on the rod chamber side of the injection cylinder 1, thereby gradually decelerating and stopping the piston rod in the injection cylinder 1.

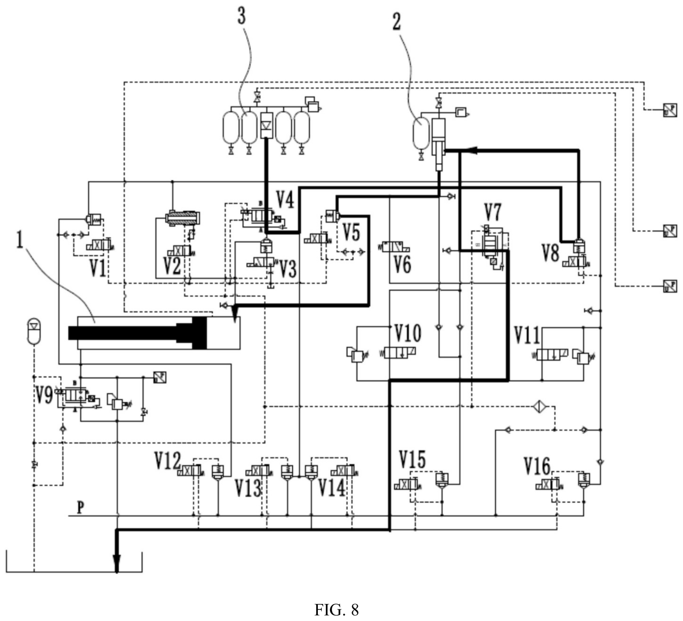

As shown in FIG. 8, the boost stage is controlled by the sixth oil circuit, the seventh oil circuit, and the eighth oil circuit. During the boosting control stage, the valve V4, the valve V5, the valve V7, and the valve V8 are energized and open. That is, from the braking stage to the boost stage, the third servo valve (the valve V9) is closed, the second servo valve (the valve V7) is opened, and the valve V5 is opened in advance during the fast injection stage. In the boost stage, the second servo valve (the valve V7) is opened. The oil in the accumulator 3 flows to the valve V8 through the valve V4 and then enters the annular chamber of the booster accumulator 2. The oil in the annular chamber is discharged through the second servo valve (the valve V7) (since the second servo valve is communicated with the oil tank, the oil pressure here is low), thereby reducing the oil pressure in the annular chamber. Thus, the piston rod in the booster accumulator 2 starts to move, such that the oil in the booster chamber starts to be discharged. The oil in the booster chamber enters the rodless chamber of the injection cylinder 1 through the valve V5, and the injection cylinder 1 is boosted through the booster accumulator 2. The opening of the first servo valve (the valve V4) is adjustable, and the opening of the second servo valve (the valve V7) is adjustable. A-bridge control is applied to the annular chamber of the booster accumulator 2 by the first servo valve and the second servo valve. By regulating the pressure in the annular chamber in the booster accumulator 2, different boost injection forces are controlled. Specifically, to reduce the injection force, the opening of the first servo valve or the second servo valve is reduced, and to increase the injection force, the opening of the first servo valve or the second servo valve is increased.

As shown in FIG. 8, the control oil circuit in the pressure relief stage is the same as the control oil circuit in the boost stage, but its oil flow direction is opposite. In the pressure relief stage, only the pressure in the rodless chamber of the injection cylinder 1 needs to be reduced to reduce the overall pressure in the injection cylinder 1, preventing tracking loss of control due to excessive oil compression during the tracking stage.

The tracking stage occurs during the mold opening operation of the die-casting machine, during which the piston rod in the injection cylinder 1 extends slowly along with the mold opening process. The tracking stage is controlled by the first oil circuit and the main oil return circuit. The valve V3, the valve V4, and the valve V9 are energized. The oil in the accumulator 3 enters the rodless chamber of the injection cylinder 1 through the first servo valve (the valve V4), and the oil in the rod chamber of the injection cylinder 1 flows back to the oil tank through the third servo valve (the valve V9). By adjusting the opening of valve V4 and the opening of the valve V9, the tracking speed of the die-casting machine can be controlled. Specifically, after the first servo valve and the third servo valve are controlled to appropriate openings, the oil pressure in the rodless chamber of the injection cylinder 1 is slightly higher than the oil pressure in the rod chamber of the injection cylinder 1. In this way, during the mold opening operation, the piston rod in the injection cylinder 1 can extend following the mold while maintaining a relatively stable and slow speed.

The automatic return stroke stage involves a return stroke operation to fully reset the mold, the piston rod in the injection cylinder 1, and other structures after the die-casting machine completes its work. Specifically, as shown in FIG. 3, the oil circuit control in the automatic return stroke stage is the same as the oil circuit control in the manual pre-stroke stage. The rod chamber of the injection cylinder 1 is supplied with oil through the tenth oil circuit, and the oil returns through the eleventh oil circuit. The valve V12 is energized, and the oil from the oil pump enters the rod chamber of the injection cylinder 1 through the valve V12. The valve V3 and the valve V14 are energized, and the oil in the rodless chamber of the injection cylinder 1 returns to the oil tank. When the oil in the oil pump enters the rod chamber of the injection cylinder 1, it generates a relatively high oil pressure in the rod chamber of the injection cylinder 1, while the oil pressure on the rodless chamber side of the injection cylinder 1 is relatively low. Therefore, the die-casting machine can perform the return stroke operation by itself to retract the piston rod in the injection cylinder 1.

## Claims

1. A dual-accumulator oil circuit system for a die-casting machine, comprising an injection cylinder and an accumulator, **characterized in that** the dual-accumulator oil circuit system further comprises a booster accumulator; the booster accumulator comprises a booster chamber and an annular chamber; the booster chamber is communicated with a rodless chamber of the injection cylinder; the accumulator is communicated with the annular chamber of the booster accumulator through a first servo valve; the annular chamber is communicated with an oil tank through a second servo valve; a rod chamber of the injection cylinder is communicated with the oil tank through a third servo valve; the dual-accumulator oil circuit system further comprises a valve assembly; the valve assembly comprises a valve V8 and a valve V5; the accumulator is connected in series with the first servo valve and the valve V8 in sequence to form a sixth oil circuit with the annular chamber of the booster accumulator; the annular chamber of the booster accumulator is communicated with the second servo valve to form a seventh oil circuit with the oil tank; the booster chamber of the booster accumulator is communicated with the valve V5 to form an eighth oil circuit with the rodless chamber of the injection cylinder; A-bridge control is applied to the annular chamber of the booster accumulator by the first servo valve and the second servo valve; the valve V5 is an oil inlet valve for supplying oil to the rodless chamber of the injection cylinder in control of a booster oil circuit; and the valve V8 is an oil inlet valve for the accumulator to supply oil to the annular chamber of the booster accumulator.

2. The dual-accumulator oil circuit system for the die-casting machine according to claim 1, **characterized in that** a differential circuit is formed between the rod chamber of the injection cylinder and the rodless chamber of the injection cylinder through the first servo valve; and oil in the accumulator enters the rodless chamber of the injection cylinder.

3. The dual-accumulator oil circuit system for the die-casting machine according to claim 2, **characterized in that** the valve assembly comprises a valve V1 and a valve V3; the valve V1 is a differential valve, and the valve V3 is a cartridge valve; the valve V1 and the valve V3 are disposed on the differential circuit; the valve V1 is disposed on a rod chamber side of the injection cylinder; and the valve V3 is disposed on a rodless chamber side of the injection cylinder.

4. The dual-accumulator oil circuit system for the die-casting machine according to claim 3, **characterized in that** the valve assembly further comprises a valve V2; the valve V2 is an active cartridge valve; the accumulator is connected in series with the first servo valve and the valve V3 in sequence to form a first oil circuit with the rodless chamber of the injection cylinder; and the accumulator forms a second oil circuit with the rodless chamber of the injection cylinder through the valve V2.

5. The dual-accumulator oil circuit system for the die-casting machine according to claim 3 or 4, further comprising an oil pump, **characterized in that** the valve assembly further comprises a valve V15; the valve V15 is an oil inlet valve for the oil pump to supply oil to the booster chamber and the annular chamber of the booster accumulator; the oil pump forms a third oil circuit with the annular chamber of the booster accumulator through the valve V15; and the oil pump forms a fourth oil circuit with the booster chamber of the booster accumulator through the valve V15.

6. The dual-accumulator oil circuit system for the die-casting machine according to claim 5, **characterized in that** the valve assembly further comprises a valve V16; the oil pump forms a fifth oil circuit with the accumulator through the valve V16; and the valve V16 is an oil inlet valve for the oil pump to supply oil to the accumulator.

7. The dual-accumulator oil circuit system for the die-casting machine according to claim 4, **characterized in that** during a fast injection stage, the oil in the accumulator enters the rodless chamber of the injection cylinder through the valve V2 via the second oil circuit; and the oil in the accumulator enters the annular chamber of the booster accumulator through the first servo valve via the sixth oil circuit.

8. The dual-accumulator oil circuit system for the die-casting machine according to claim 4 or 7, **characterized in that** during a boost stage, the third servo valve is closed, the second servo valve is opened, the oil in the accumulator enters the annular chamber of the booster accumulator, oil in the annular chamber is discharged through the second servo valve, and oil in the booster chamber enters the rodless chamber of the injection cylinder.

9. The dual-accumulator oil circuit system for the die-casting machine according to claim 5, **characterized in that** the valve assembly further comprises a valve V13; the valve V13 is an oil inlet valve for the oil pump to supply oil to the rodless chamber of the injection cylinder; and the oil pump is communicated with the valve V13 and the valve V3 in sequence to form a ninth oil circuit with the rodless chamber of the injection cylinder.

10. The dual-accumulator oil circuit system for the die-casting machine according to claim 9, **characterized in that** the valve assembly further comprises a valve V14 and a valve V12; the valve V12 is an oil inlet valve for the oil pump to supply oil to the rod chamber of the injection cylinder; the valve V14 is an oil return valve for oil in the rodless chamber of the injection cylinder to flow back to the oil tank; the oil pump is communicated with the valve V12 to form a tenth oil circuit with the rod chamber of the injection cylinder; and the injection cylinder is connected in series with the valve V3 and the valve V14 in sequence to form an eleventh oil circuit with the oil tank.
